# EUROPEAN PATENT SPECIFICATION

(11) **EP 3 270 243 B1**
(45) Date of publication and mention of the grant of the patent: **23.10.2019**
(21) Application number: 17150770.0
(22) Date of filing: 10.01.2017
(51) Int. Cl.: G05B 19/05, G05B 23/02, G06Q 10/06, G06F 9/44, G21D 3/00, G05B 19/042

(54) **METHODS AND SYSTEMS FOR CONTEXT BASED OPERATOR ASSISTANCE FOR CONTROL SYSTEMS**
VERFAHREN UND SYSTEME ZUR KONTEXTBASIERTEN BEDIENERUNTERSTÜTZUNG FÜR STEUERUNGSSYSTEME
PROCÉDÉS ET SYSTÈMES D'ASSISTANCE POUR OPÉRATEURS BASÉE SUR LE CONTEXTE POUR SYSTÈMES DE COMMANDE

(30) Priority: 13.07.2016 IN 201641023981
(43) Date of publication of application: 17.01.2018
(73) Proprietor: Yokogawa Electric Corporation, Tokyo 180-8750 (JP)
(72) Inventor: Pandian, Alagu Raja, 560103 Bangalore (IN); Kashyap, Naveen, 560103 Bangalore (IN); Periaswamy, Subramanian, 560103 Bangalore (IN); Ramachandran, Nivashkumar, 560103 Bangalore (IN)
(74) Representative: Henkel & Partner mbB

(56) References cited:
- EP-A1- 3 012 701
- EP-A1- 3 018 596
- WO-A1-2014/054051
- US-A1- 2010 211 192

## Description

### Field of the Invention

The invention relates to the field of control systems, including industrial or other process control systems. In particular, the invention enables context based provisioning of operator assistance within control systems in a plant or industry.

### Background

Control system engineering refers to a domain of engineering that deals with architectures, mechanisms and algorithms for maintaining output of a specific system or process within a desired range. Automated control systems are used extensively in industry and can for example be implemented using programmable logic controllers (PLC(s)), or in the case of more complex systems using distributed control systems (DCS) or supervisory control and data acquisition systems (SCADA).

Automated control systems rely on one or more controllers communicatively coupled to one or more field devices. Field devices (e.g. sensors, valves, switches, receivers and transmitters) are located within the process environment corresponding to the control system (for example, but not limited to, an industrial plant or system) and may be configured to perform physical or process control functions to control one or more components, processes or variables under observation within the process environment. Process controllers may be located within the process environment and are configured to receive signals from field devices, make control decisions, generate control signals and communicate with field devices.

Operation of control systems often rely on a set of standard operating procedure(s) (SOP(s)) - which prescribe one or more methods (i.e. sequence of steps and / or operator actions) for operating the control systems, and which one or more methods are considered optimal for achieving a desired process state or process outcome. Control systems operators are trained to implement standard operating procedures corresponding to the respective control systems processes that they are designated to operate.

Despite provision of standard operating procedures, it has been observed that experienced operators typically perform better than new or inexperienced operators in complying with standard operating procedures and also in responding to control system events such as alarms, failures or other abnormal events.

However, insofar as experienced operators are concerned, organizations are faced with the multiple challenges of employee resignations and employee retirement -which undermine the overall experience pool within an organization, and necessitate regular induction of new or inexperienced operators into the organization.There is accordingly a need for organizations to be able to retain operator experience in a systematic manner that distinguishes between valuable and non-valuable experience, and which systematically stores the valuable operator experience in a retrievable form.

Additionally, certain plants or industrial systems implement operations that require to be performed at irregular intervals - and therefore, despite being trained in applicable standard operating procedures, operators executing such operations after significant intervals of time may require assistance or guidance to ensure compliance with the prescribed standard operating procedures.

Yet further, insofar as inexperienced operators are concerned, organizations require to implement systems and methods to monitor operator compliance with standard operating procedures.There is accordingly a need for a solution that enables monitoring of operator compliance based on control system state changes (that occur as a result of operator inputs received through a human-machine interface) rather than based on analysis of the operator inputs themselves.

It has also been found that as the complexityor urgency of an event or task increases, performance of inexperienced operators correspondingly deteriorates.Accordingly, while an inexperienced operator may be able to operate a control system satisfactorily under ordinary circumstances, the same operator may commit errors or delays while responding to complexevents or urgent situations - which errors or delays may cause a deteriorating state of a control system to deteriorate even more seriously or rapidly. There is therefore a need for methods and systems that assess context associated with state of a control system and / or an operator state, and which enable provision of operator assistance or operator guidance based on the assessed context.

US 2010 211192 A1 discloses a method includes receiving at least one search parameter, where the at least one search parameter defines one or more restrictions on types of event patterns. The method also includes searching a collection of historical events associated with a process control system. The method further includes identifying one or more groups of alarms each having a pattern that satisfies the one or more restrictions. In addition, the method includes outputting information identifying the one or more groups of alarms. The method could also include receiving a selection of at least one of the one or more identified groups of alarms. The method could further include notifying one or more components in the process control system to begin dynamically suppressing alarms in the at least one selected group of alarms.

WO 2014 054051 A1 discloses a health monitoring system for a process plant wherein the system comprises a plurality of sensors installed on the associated equipment of the process plant, a processor connected to the sensors and a central computer connected to the processor to continuously monitor and diagnose the health of the process plant and its associated equipment.

EP 3 012 701 A1 discloses a method for receiving activity data from a plurality of sensors associated with at least a portion of an industrial process system. The method also includes monitoring the activity data to identify a period of inactivity of an operator. The method also includes responsive to identifying the period of inactivity, issuing an alarm.

EP 3 018 596 A1 discloses a multi-platform industrial search system facilitates indexing and searching of plant-wide data residing on multiple different data platforms. The industrial search system automatically inventories industrial devices and other data sources located throughout a plant, and identifies available data items on each data source. The search system indexes the discovered data items in a federated data model that can subsequently be searched to locate data items or tags of interest.

### Summary

The invention relates to the field of control systems and enables context based provisioning of operator assistance within control systems in a plant or industry.

According to the present invention the above object is achieved by means of the method of claim 1 and the system of claim 6. The dependent claims are directed to different advantageous aspects of the invention.

### Brief Description of the Accompanying Drawings

Figure 1 illustrates a process control system.
Figure 2 illustrates a method for generating operator best practices.
Figure 3 illustrates a method for providing context based operator guidance and monitoring.
Figures 4A and 4B illustrates method of ascertaining context associated with state of a control system and / or an operator state, for the purposes of providing operator guidance.
Figure 5 illustrates a method for implementing generation of operator best practices and for applying the operator best practices for the purposes of context based operator guidance and monitoring.
Figure 6 illustrates an exemplary process environment configured to implement the methods of the present invention.
Figure 7 illustrates an exemplary computing system in which various embodiments of the invention may be implemented.

### Detailed description

The present invention provides methods, systems and computer program products for retaining operator experience by recording operator best practices, and for providing guidance to control system operators based on monitoring of control system events or control system states, and / or monitoring of complexity of said control system events or states.

The invention is premised on the observation that an experienced operator makes better operational decisions, and that actions by an experienced operator are suitable for being used as best practices to guide inexperienced operators. The invention is additionally premised on an understanding that one or more of control system states, control system events and / or operator statesis relevant to deciding whether an operator requires guidance or assistance, and for selecting the type and degree of guidance or assistance required by an operator in response to the detected control system stateor control system event or operator state.

The invention seeks to generate operator best practices by determining whether an operator is an experienced operator or an inexperienced operator, and by recording operator actions taken by experienced operator(s) as best practicesto be implemented in response to a particular control system event or control system state. The invention additionally determines whether to provide operator guidance / assistance and the type and degree of operator guidance / assistance to be provided, based on (i) detection of one or more of a control system state or control system event or operator state, and (ii) a determinationwhether the identified event or state is a complex state,in accordance with a predefined set of rules for ascertaining event or state complexity.

For the purposes of the present invention, the term "complex event" shall mean an event having a sufficiently high degree of difficulty - and on occurrence whereof, an operator is understood to require guidance or assistance.

For the purposes of the present invention, the term "complexity threshold" shall mean a degree of event difficulty or event complication beyond which a control system event is deemed to be a complex event, thereby triggering provision of guidance or assistance to a control system operator.

For the purposes of the present invention, the term "control system parameter(s)" shall be understood as referring to one or more parameters whose determinable values may be used as indicators of state of a control system and / or control operations.

For the purposes of the present invention, the term "control system process" shall mean a process being implemented by or within a control system.

For the purposes of the present invention, the terms "setpoint" or "set point" shall mean a desired or target value for a variable or parameter associated with a control system.

For the purposes of the present invention, the term "tag" shall be understood as a unique identifier that is associated with or that can be used to access a particular function block within a control system. In control systems such as DCS or SCADA, a tag simply comprises a unique name, variable or memory address which may be used to access or control a component or function block to which the tag has been assigned. Tags associated with physical components within a control system may be referred to as "physical tag(s)", while tags associated with data variables, calculations, or logical or sequential operations (and which do not identify a physical component) may be referred to as "virtual tag(s)".

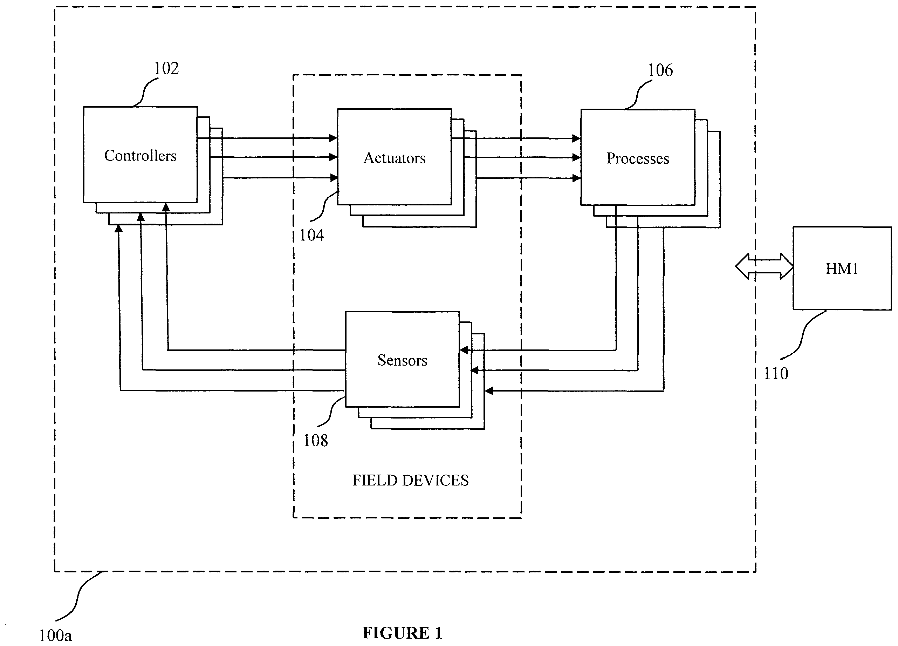

Figure 1 illustrates a process control system 100. The process control system includes a plurality of controllers 102 and a plurality of field devices, such as for example actuators 104 and sensors 108. Controllers 102 control processes 106 through field devices within the process control system. By way of example, sensors 108 may communicate feedback to controllers 102 regarding states of one or more processes 106. Based on received feedback, controllers 102 may generate control signals and communicate them to actuators 104 to control processes under execution. The control system 100 and one or more of the controllers, field devices and processes may be configured to communicate with a Human-Machine-Interface (HMI) 110. The Human-Machine-Interface may in an embodiment comprise an operator terminal or a computer terminal configured to receive operator inputs for generating control instructions to the control system and may also be configured to display information regarding status of or outputs from the control system.

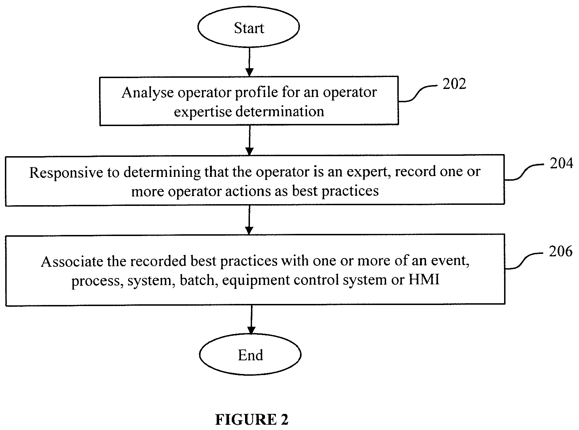

Figure 2 illustrates a method of identifying and recording best practices corresponding to a control system or control system process. The method of Figure 2 is implementable in response to operator inputs or operator actions received at a Human-Machine-Interface (HMI) or at a field device within a control system. For the purposes of the present invention, operator inputs or actions shall be understood to include any operator log-in information, operator instructions or operator actions.

Step 202 comprises identifying an operator profile corresponding to the operator responsible for the received operator input, retrieving said operator profile from a database and analysing the retrieved operator profile to determine expertise of the operator responsible for the received operator input.

In an embodiment of the invention, the retrieved operator profile may include one or more of (i) an operator identifier (ID), (ii) information regarding time spent by the operator in operations relevant to one or more of an organization, site, plant, plant unit, equipment, specific equipment component or device, HMI, control system or control system process, (iii) training received by the operator in connection with a specific HMI, control system process or control system event, (iv) any specialization acquired by the operator with respect to a specific plant unit, equipment, component or device, HMI, control system or control process, (v) information regarding operator experience with respect to control system HMIs provided by a specific control system manufacturer or vendor, and (vi) experience as an operator in any plant. It would be understood that as a general principle, parameters for ascertaining experience may include one or more of years, days or hours spent in relevant operations, acquired academic qualifications, or training programs attended by the operator.

The analysis at step 202 may additionally include analysis of the determined operator expertise based on a predefined set of rules, to determine whether the operator qualifies as an expert operator. The predefined set of rules may include rules specifying a predefined amount of time spent (such as a minimum number of hours spent on a control system process or at an HMI) or a minimum set of qualifications acquired by an operator - that would qualify the operator as an expert.

Responsive to determining that an operator is an expert, step 204 comprises recording operator inputs received or operator actions implemented at the HMI, which recorded operator inputs or actions may be stored in a best practices database and thereafter treated as operator best practices. The recorded operator inputs may be stored as information representing one or more of (i) a series of actions taken by the expert operator and (ii) one or more process values or control system parameter values set or implemented by the expert operator in the course of said series of actions. The recorded operator inputs or actions may include recorded snapshots of control system alarms or control system events, snapshots of navigation by the operator through windows, faceplates or other interface elements of the HMI, and / or setpoint values implemented by the operator through the HMI. In an embodiment, the recorded information may also include timestamp information corresponding to each recorded input or action - which timestamp information may be used for benchmarking, analysis or comparison purposes.

Step 206 comprises associating the recorded operator inputs with one or more of a control system event, control system process, control system component, control system batch, or control system HMI - which recorded operator inputs may thereafter be treated as a best practice (or a set of best practices) to be adopted by operators with regard to said control system event, control system process, control system component, control system batch, or control system HMI (or a combination of any of the above). By way of example, a set of operator inputs that are implemented by an experienced operator in response to a specific alarm event, may be recorded as a best practice and may be associated with such alarm event, so that when an identical alarm event occurs in the future, an operator (for example an inexperienced operator) can be guided to implement the operator best practice associated with said alarm event. The association between recorded operator inputs and one or more of control system events, control system processes, control system components, control system batches, or control system HMIs may be achieved in any number of ways, including in an exemplary embodiment through a relational database or a graph database or a combination of both.

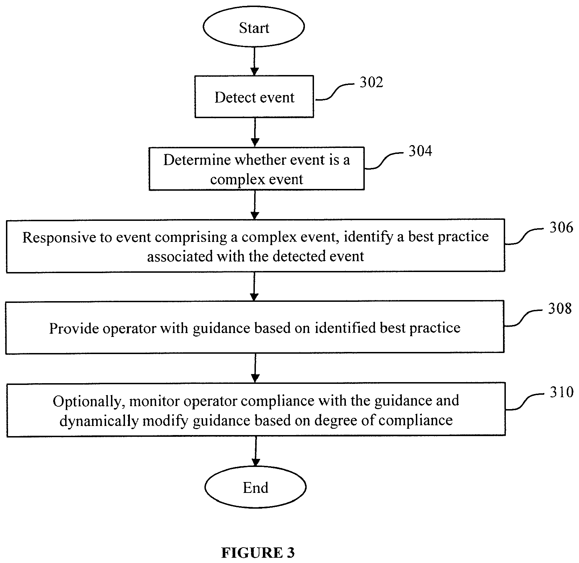

Figure 3 illustrates a method for providing guidance or assistance to a control system operator, in accordance with the present invention. In an embodiment, the method of Figure 3 provides context based assistance to (or operator guidance) and monitoring of, an operator of a control system.

Step 302 comprises detecting a control system event. For the purposes of the present invention a control system event may comprise any change in state of a control system. Exemplary control system events may include any one or more of (i) an alarm event (ii) a notification event (iii) an operator input event or (iv) any other detectable state change in a control system controller, field device, actuator, sensor,or other control system component.

For the purposes of the present invention, detected control system events may be defined in terms of one of more of the following control system event parameters : (i) event source (i.e. a tag associated with a hardware or software component within the control system, at which the control system event occurs), (ii) time of the event, (iii) event category (example, process, system or batch event), (iv) event severity (e.g. event severity rated on a scale of between 1 and 1000, in accordance with OPC standards), and (v) Operator ID (i.e. an operator ID of an operator to whom the control system event may be attributed).

For the purposes of the present invention, operator input events may include inputs received from an operator through an HMI for implementing any one or more of (i) log-in of an operator (ii) input of an operator ID, (iii) increase, decrease or any other change in a control system parameter, (iv) acknowledgement of an alarm, (v) implementing a search for a specific tag or input/output, or (vi) modification of a control system setpoint.

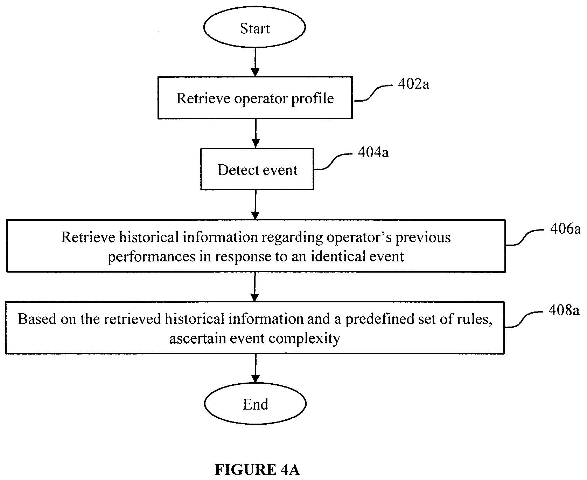

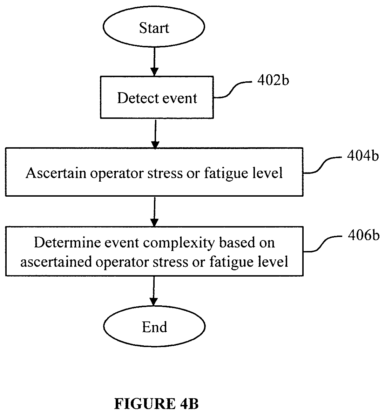

Step 304 thereafter comprises using a set of predefined rules to ascertain whether the detected event is a complex event. The determination regarding event complexity may be carried out in a number of different ways, and may be based on one or more predefined sets of rules. In an embodiment of the invention, the determination regarding event complexity may be implemented based on one or more of the methods discussed hereinafter in connection with Figures 4A and 4B.

Responsive to ascertaining that the detected event is a complex event, step 306 comprises identifying and retrieving one or morebest practices associated with the detected event. In an embodiment of the invention, identification of best practices associated with the detected event may involve selection of a best practice from among a plurality of best practices stored in a best practices database in accordance with the method previously discussed in connection with Figure 2. In an embodiment, step 306 comprises retrieving a set of operator inputs received from a control system operator at the control system, in response to a previously occurring instance of the detected control system event.

The selection of a best practice from among the plurality of best practices may be based on identifying one or more best practices that have been previously associated (for example in accordance with the teachings of method step 206) with the detected control system event (or with control system events having one or more identical control system event parameters). In an embodiment of the invention, a plurality of best practices may be ranked in accordance with their relevance to (or strength of association with) the detected control system event, and one or more best practices may be selected from the plurality of ranked best practices based on such rankings. In an embodiment, the *n* highest ranked best practices may be selected, and in a more specific embodiment, the highest ranked best practice may be selected at step 306.

Step 308 thereafter comprises providing the operator with guidance for responding to the detected control system event, wherein the guidance may comprise one or more recommendations for next steps to be implemented by the operator. The recommended next steps provided by way of guidance may comprise recommended operator inputs or actions, which recommended inputs or actions are may be retrieved from the one or more best practices selected at step 306, and which may thereafter be identified for and presented to the operator as suggested next actions or corrective or remedial actions for implementation by the operator through the HMI.In an embodiment of the invention, the recommended operator inputs or actions may comprise a sub-set of a set of operator inputs that comprise the retrieved one or more best practices selected at step 306.

Methods of providing the operator with guidance based on one or more selected best practices are discussed in more detail subsequently.

Step 310 may additionally comprise monitoring operator compliance with the guidance provided at step 308. In an embodiment of the invention step 310 is an optional step. The step of monitoring operator compliance with the guidance provided at step 308 may comprise comparing operator inputs received from the operator at the HMI against the operator inputs or actions recommended at step 308. In the event of a detected non-compliance with the recommended operator inputs or actions, step 308 may additionally comprise reiterating the previous guidance to the operator, or providing additional or more granular information / guidance (comprising a modified, or supplemental operator guidance), or providing different remedial or corrective actions for the operator to follow. In an embodiment, such additional or more granular guidance may comprise selecting additional or alternative modes for delivery of the guidance (which is discussed in more detail hereinafter) or providing additional information such as help information or pop-up alerts that enable the operator to locate certain settings / tags using on-screen visual information such as arrows or highlights.

Based on the above, it would be understood that detection of a control system event or detection of a change in state of the control system may serve as a trigger for providing operator guidance. In embodiments where the invention is implemented in control systems that do not permit for control system input validation (for example due to security concerns or restricted access permissions), the method for providing operator guidance is triggered in response to detecting one or more of (i) an alarm event (ii) a notification event, or (iii) any other detectable state change in a control system controller, field device, actuator, sensor, or other control system component.

Figure 4A illustrates a method embodiment for determining whether a detected control system event is a complex event for the purposes of step 304 of Figure 3.

Step 402a comprises retrieving an operator profile corresponding to the operator monitoring the concerned control system, control system component, or HMI. In an embodiment of the invention, an operator profile may be retrieved when an operator logs in to a control system through an HMI - for example, at the start of the operator's shift. The relevant operator profile may be identified or selected based on an operator ID provided by the operator during the log-in process.

Step 404a comprises detecting an instance of a control system event. As in the case of the methods previously described in connection with Figure 3, a control system event may comprise any change in state of a control system, and may include one or more of an alarm event, a notification event, an operator input event or any other detectable state change in a control system controller, field device, actuator, sensor, or other control system component.

Step 406a thereafter comprises retrieving based on the operator profile, historical information regarding the concerned operator's previous performances in response to an identical instance of a control system event (i.e. an instance of a control system event having control system event parameters that match control system event parameters of the detected instance of the control system event). It would be understood that information regarding an operator's previous performances in response to an identical instance of a control system event may include information on a number of parameters, including one or more of the number of times that operator has previously encountered instances of the control system event, the number of instances in which the operator has deviated from best practices associated with the control system event, the extent of such prior deviations, the number of times that the operator has complied with best practices associated with the control system event, and time taken by the operator in a previously encountered instance of a control system event for bringing a control system (or part thereof) or control system process from an abnormal state to a normal state.

It would be understood that for the purposes of accurately determining the concerned operator's previous performances in connection with detected control system events, the methods of the present invention may rely on plant hierarchy information. In an embodiment, if two or more detected control system events (e.g. alarm events) arise from a single process unit (or single plant sub-system or control sub-system) within a plant, this group of detected control system events may be considered together for the purposes of ascertaining whether the concerned operator has faced the same combination of control system events, and if so, the operator's previous performances in response to the same combination of events. In another embodiment, if a control system event arises as a consequence of a state change in a component or tag that is common to two or more process units (or two or more distinct plant sub-systems or control sub-systems), said control system event may be combined with a predefined number of previously detected events corresponding to each or both of said two or more process units (or two or more distinct plant sub-systems or control sub-systems) for the purpose of ascertaining whether the operator has previously been confronted with an identical control system event, and if so, his performance in response to such control system event.

Step 408a comprises determining complexity of the detected instance of a control system event based on the retrieved historical information and a predefined set of rules. In an embodiment of the invention, the determination regarding complexity of the detected instance of the control system event may comprise ascertaining one or more of:
- whether the number of times that a concerned operator has encountered an instance of an identical control system event is less than a predefined threshold number -and if so, treating the detected instance of the control system event as a complex event, or
- whether the concerned operator has deviated from operator best practices in previous instances where said operator has encountered an identical control system event, and if so, whether the number or extent of such deviations, or the consequences of such deviations, are consistent with a predefined criteria for allowable or acceptable deviations. In the event the number or extent of such deviations fall outside the predefined criteria for allowable or acceptable deviations, the detected event is treated as a complex event, or
- whether multiple alarm events have been detected in connection with the same HMI or plant process unit.

Figure 4B illustrates another method embodiment for determining whether a detected control system event is a complex event for the purposes of step 304 of Figure 3.

Step 402b comprises detecting an instance of a control system event. As in the case of methods described in connection with Figure 3, a control system event may comprise any change in state of a control system, and may include one or more of an alarm event, a notification event, an operator input event or any other detectable state change in a control system controller, field device, actuator, sensor, or other control system component.

Step 404b thereafter comprises ascertaining a level of operator stress or operator fatigue based on one or more measured parameters. A level of operator stress or operator fatigue may be determined based on one or more of several factors. Exemplary factors that may be used for determining levels of operator stress or operator fatigue may include one or more of:
- A number of control system processes or HMIs that an operator is simultaneously monitoring
- A number of alarms or control system events that simultaneously require an operator's attention
- The length of time for which the concerned operator has been on shift
- The total number of alarms or complex control system events that the concerned operator has previously addressed during the ongoing shift
- Information received from hardware sensors that are configured to measure physiological information of the operator (such as for example, heart rate, pulse, breathing etc.)
- Information received from hardware sensors (such as for example, wristband activity trackers, or electroencephalogram (EEG) devices) that are configured to provide information regarding a subject's physical condition based on a variety of parameters including one or more of EEG signal patterns, steps taken, distance walked, calories burned, floors climbed, activity duration and intensity, quality and amount of sleep recently had by the subject etc.
- informationdescribing rest or physical activity undertaken by the control system operator within a predefined time window.

For the purposes of the invention, embodiments that rely on physiological information or stress or fatigue related information received from hardware sensors may additionally rely on correlations between alarm events and physiological parameter variability for the purposes of cause-effect analysis and for defining rules for determining complexity or severity of a control system event. By way of example, cause-effect analysis may establish that certain physiological symptoms or states (for example a heart rate that exceeds a predefined threshold) is found in a statistically significant number of cases where a certain type of, or more than a certain number of, alarm events have been notified - in which case, detection of an operator physiological state that exceeds or is outside the bounds of this predefined threshold may be used as a trigger for operator guidance in accordance with the teachings of the present invention.

In the event any one or more of the above parameters are found to exceed predefined limits, it may be concluded that the level of operator stress or operator fatigue has exceeded acceptable levels, and the detected instance of the control system event therefore requires to be treated as an event of sufficient complexity to necessitate provision of operator guidance (for example, in the manner described previously in connection with step 308 of Figure 3).

It would be understood that a determination regarding event complexity, and whether toprovide operator guidance in accordance with the teachings of Figure 3 may based on exemplary method embodiments described in connection with either of Figures 4A or 4B, or may be based on a combination of such method steps.

Reverting to step 308 of Figure 3, best practices based guidance may be provided to an operator in any number of delivery modes, including by way of one or more of text based or graphics based instructions provided to the operator through an HMI, pop-up alerts, audio or voice based instructions or assistance provided to the operator through the HMI, or video based instructions or assistance provided to the operator through the HMI.

The selection of delivery mode for communicating operator guidance may be based on any one of several criteria, including control system type, HMI type, operator profile information, operator preferences, type or quality of operator input received through an HMI, operator experience or competence, type of alarms or control system events that are detected, determined complexity of a control system event, number of complex control system events that the operator is simultaneously confronted with, determined stress or fatigue levels of the operator, and the level or quality of operator compliance with guidance already being communicated.

In an embodiment of the invention, modes of delivering operator guidance may rely on one or more "avatars" i.e. a representation of a human assistant. Avatars may be voice based (i.e. may involve provision of audio guidance using voice instructions or comments) or video based (i.e. may involve provision of video guidance using a video representation or image of an individual or character, which appears on the HMI while simultaneously providing audio or text based instructions or comments). The image or personality used for a video based avatar may in an embodiment be selected based on operator preference.

In an embodiment of the invention, (i) pop-up alerts or text based alerts may be used for providing guidance in response to detection of control system events of low complexity and / or low severity, (ii) video based guidance may be provided for control system events of low complexity and / or low severity, and / or (iii) audio based guidance may be provided as the complexity or severity of the detected control system events increases, or as the stress or fatigue levels of the concerned operator are found to have exceeded predefined thresholds.

For the purposes of the present invention, operator guidance may comprise instructions provided to the operator in the form of subsequent steps to be implemented, additional information or inputs required from the operator to perform a subsequent step, or displaying information or status messages upon receipt of an operator input (or upon completion of a step by the operator) at the HMI.

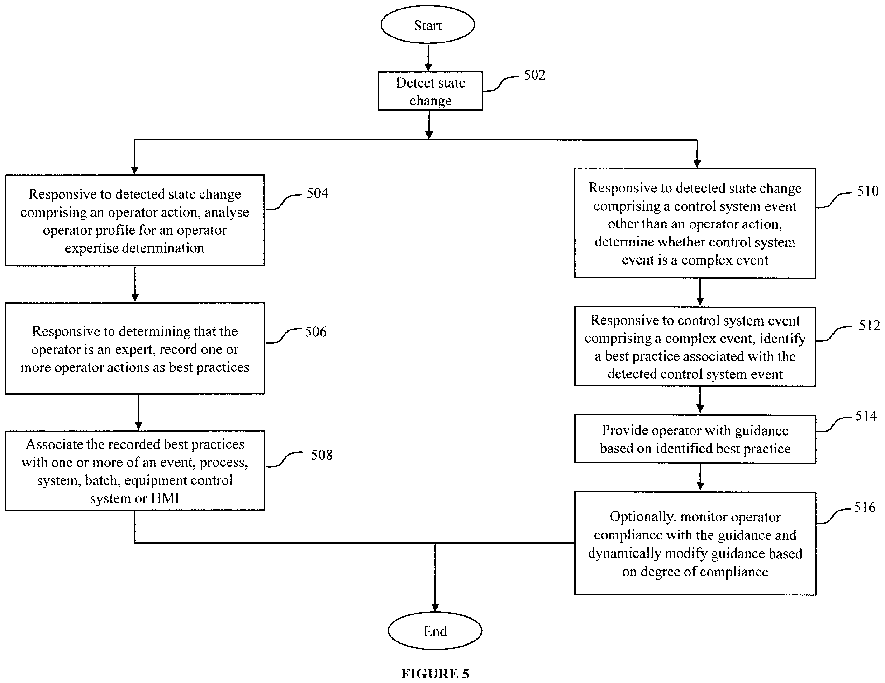

Figure 5 illustrates a preferred embodiment of a method in accordance with the teachings of the present invention -which implements various methods steps in accordance with the teachings of Figures 2, 3, 4A and 4B.

Step 502 of Figure 5 comprises detected a state change within a control system. The detected state change may comprise an operator input event such as an operator action or operator input received at a human-machine interface, or at a field device within the control system. Alternatively, the detected state change may comprise any detected control system event other than an operator input event- such as an alarm event, a notification event, or any other detectable state change in a control system controller, field device, actuator, sensor or other control system component.

Responsive to the determining that the state change detected at step 502 comprises an operator action (or operator input event), step 504 comprises identifying an operator profile corresponding to the operator responsible for the received operator input, retrieving said operator profile from a database and analysing the retrieved operator profile to determine expertise of the operator responsible for the received operator input.

Responsive to determining that an operator is an expert, step 506 comprises recording operator inputs received or operator actions implemented at the HMI, which recorded operator inputs or actions may be stored in a best practices database and thereafter treated as operator best practices.

Step 508 comprises associating the recorded operator inputs with one or more of a control system event, control system process, control system component, control system batch, or control system HMI - which recorded operator inputs may thereafter be treated as a best practice (or a set of best practices) to be adopted by operators with regard to said control system event, control system process, control system component, control system batch, or control system HMI (or a combination of any of the above).

It would be understood that steps 504 to 508 of Figure 5 correspond to steps 202 to 206 of Figure 2, and the various specific embodiments described previously in connection with steps 202 to 206 are likewise applicable and implementable in connection with steps 504 to 508 of Figure 5.

Responsive to the determining that the state change detected at step 502 comprises a control system event other than an operator action, step 510 thereafter comprises using a set of predefined rules to ascertain whether the detected event is a complex event. The determination regarding event complexity may be carried out in a number of different ways, and may be based on one or more predefined sets of rules. In an embodiment of the invention, the determination regarding event complexity may be implemented based on one or more of the methods discussed previously in connection with Figures 4A and 4B.

Responsive to ascertaining that the detected event is a complex event, step 512 comprises identifying and retrieving one or morebest practices associated with the detected event. In an embodiment of the invention, identification of best practices associated with the detected event may involve selection of a best practice from among a plurality of best practices stored in a best practices database in accordance with method steps 504 to 508 (or the method previously discussed in connection with Figure 2).

Step 514 thereafter comprises providing the operator with guidance for responding to the detected control system event, wherein the guidance may comprise one or more recommendations for next steps to be implemented by the operator. The recommended next steps provided by way of guidance may comprise recommended operator inputs or actions, which recommended inputs or actions are may be retrieved from the one or more best practices selected at step 512, and which may thereafter be identified for and presented to the operator as suggested next actions or corrective or remedial actions for implementation by the operator through the HMI. In an embodiment of the invention, the recommended operator inputs or actions may comprise a sub-set of a set of operator inputs that comprise the retrieved one or more best practices selected at step 512.

Step 516 may additionally comprise monitoring operator compliance with the guidance provided at step 514. In an embodiment of the invention step 516 is an optional step. The step of monitoring operator compliance with the guidance provided at step 514 may comprise comparing operator inputs received from the operator at the HMI against the operator inputs or actions recommended at step 514. In the event of a detected non-compliance with the recommended operator inputs or actions, step 516 may additionally comprise reiterating the previous guidance to the operator, or providing additional or more granular information / guidance (comprising a modified, or supplemental operator guidance), or providing different remedial or corrective actions for the operator to follow.

It would be understood that steps 510 to 516 of Figure 5 correspond to steps 304 to 310 of Figure 3, and the various specific embodiments described previously in connection with steps 304 to 310 are likewise applicable and implementable in connection with steps 510 to 516 of Figure 5.

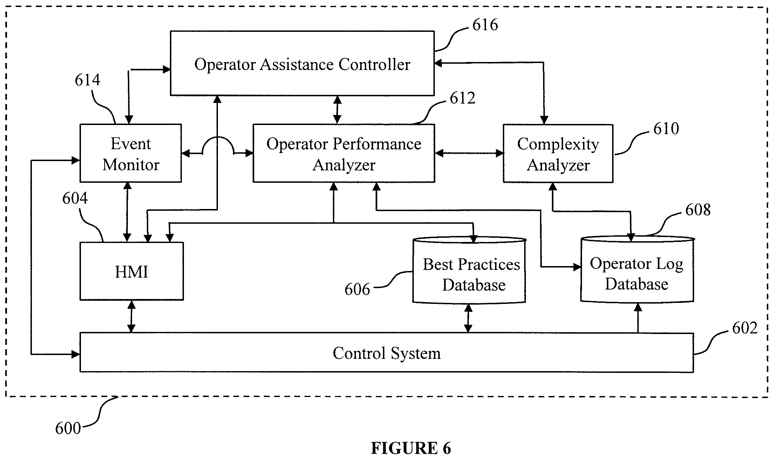

Figure 6 illustrates an exemplary process environment 600 configured to implement the methods of the present invention. Control system 602 is communicably coupled with HMI 604, best practices database 606, operator log database 608, and event monitor 614. The process environment 600 additionally comprises complexity analyzer610, operator performance analyser 612 and operator assistance controller 616. It would be understood that control system 602 as well one or more of the control system components 604 to 616 may be implemented using one or more processors.

In the illustrated embodiment, HMI 604 comprises a Human-Machine-Interface configured to enable an operator to monitor and control one or more components within a control system.

Best practices database 606 may comprise a repository of operator best practices, which operator best practices may have been determined and stored in accordance with the method steps discussed in connection with Figure 2 hereinabove.

Operator Log Database 608may comprise a repository of operator logs generated by control system602 - which enables retrieval of operator profile information and / or historical information that is relevant to experience and performance of an operator in connection with a specific control system, control sub-system or control system component or tag.

Event monitor 614 comprises a processor driven monitoring engine configured to detect changes in state of one or more components or tags within the control system. Event monitor 614 may be communicably coupled to control system 602 for the purposes of detecting state changes, and may additionally be communicably coupled with HMI 604 so as to provide information to an operator regarding the detected state changes. In an embodiment of the invention event monitor 614 may be communicably coupled with one or more controllers, field devices, sensors and / or actuators within the control system and may monitor control system events based on information received from said one or more controllers, field devices, sensors and / or actuators.

Operator performance analyzer612 may comprise a processor driven analysis engine configured for at least one of (i) analysing an operator's profile for operator expertise determinations, (ii) recording operator actions implemented by expert operator(s) as best practices within best practices database 606, (iii) associating recorded best practices with one or control system events, control system processes, control system components, control system batches, or control system HMIs, (iv) comparing operator actions or state changes detected at event monitor 614 against best practices retrieved from best practices database 606 for the purpose of determining whether an operator requires guidance based on best practices associated with a detected control system event and (v) determining real time operator compliance with guidance being provided to the operator.

Complexity analyzer610 may comprise a processor driven analysis engine configured to determine complexity of one or more detected control system events in accordance with one or more rules for determining event complexity. In an embodiment, complexity analyzer610 may be configured to determine event complexity based on one or more of the methods described hereinabove, including in connection with Figures 4A or 4B.

Each of HMI 604, complexity analyzer610, operator performance analyzer612 and event monitor 614, may be communicably coupled with operator assistance controller 616. Operator assistance controller 616 may in an embodiment comprise a processor implemented engine for triggering and providing operator guidance to an operator through HMI 604, in accordance with any of the methods described hereinabove.

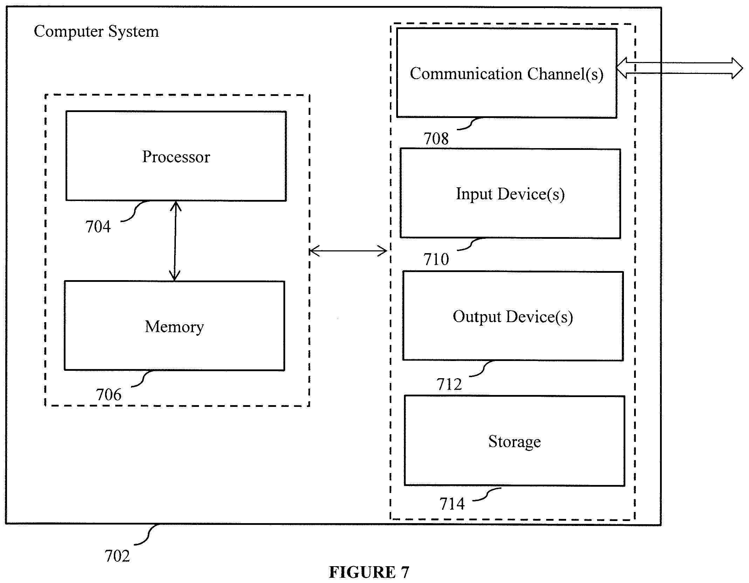

Figure 7 illustrates an exemplary computing system in which various embodiments of the invention may be implemented.

The system 702 comprises at least one processor 704 and at least one memory 706. The processor 704 executes program instructions and may be a real processor. The processor 704 may also be a virtual processor. The computer system 702 is not intended to suggest any limitation as to scope of use or functionality of described embodiments. For example, the computer system 702 may include, but not be limited to, one or more of a general-purpose computer, a programmed microprocessor, a micro-controller, an integrated circuit, and other devices or arrangements of devices that are capable of implementing the steps that constitute the method of the present invention. Exemplary embodiments of a system 702 in accordance with the present invention may include one or more servers, desktops, laptops, tablets, smart phones, mobile phones, mobile communication devices, tablets, phablets and personal digital assistants. In an embodiment of the present invention, the memory 706 may store software for implementing various embodiments of the present invention. The computer system 702 may have additional components. For example, the computer system 702 includes one or more communication channels 708, one or more input devices 710, one or more output devices 712, and storage 714. An interconnection mechanism (not shown) such as a bus, controller, or network, interconnects the components of the computer system 702. In various embodiments of the present invention, operating system software (not shown) provides an operating environment for various softwares executing in the computer system 702 using processor 704, and manages different functionalities of the components of computer system 702.

The communication channel(s) 708 allow communication over a communication medium to various other computing entities. The communication medium provides information such as program instructions, or other data in a communication media. The communication media includes, but not limited to, wired or wireless methodologies implemented with an electrical, optical, RF, infrared, acoustic, microwave, Bluetooth or other transmission media.

The input device(s) 710 may include, but is not limited to, a touch screen, a keyboard, mouse, pen, joystick, trackball, a voice device, a scanning device, or any another device that is capable of providing input to the computer system 702. In an embodiment of the present invention, the input device(s) 710 may be a sound card or similar device that accepts audio input in analog or digital form. The output device(s) 712 may include, but not limited to, a user interface on CRT, LCD, LED display, or any other display associated with any of servers, desktops, laptops, tablets, smart phones, mobile phones, mobile communication devices, phablets, personal digital assistants, printer, speaker, CD/DVD writer, or any other device that provides output from the computer system 702.

The storage 714 may include, but is not limited to, magnetic disks, magnetic tapes, CD-ROMs, CD-RWs, DVDs, any types of computer memory, magnetic stripes, smart cards, printed barcodes or any other transitory or non-transitory medium which can be used to store information and can be accessed by the computer system 702. In various embodiments of the present invention, the storage 714 contains program instructions for implementing the described embodiments.

In an embodiment of the present invention, the computer system 702 is part of a distributed network.

The present invention may be implemented in numerous ways including as a system, a method, or a computer program product such as a computer readable storage medium or a computer network wherein programming instructions are communicated from a remote location.

The present invention may suitably be embodied as a computer program product for use with the computer system 702. The method described herein is typically implemented as a computer program product, comprising a set of program instructions which is executed by the computer system 702 or any other similar device. The set of program instructions may be a series of computer readable codes stored on a tangible medium, such as a computer readable storage medium, for example, diskette, CD-ROM, ROM, flash drives or hard disk, or transmittable to the computer system 702, via a modem or other interface device, over either a tangible medium, including but not limited to optical or analogue communications channel(s) 708. The implementation of the invention as a computer program product may be in an intangible form using wireless techniques, including but not limited to microwave, infrared, bluetooth or other transmission techniques. These instructions can be preloaded into a system or recorded on a storage medium such as a CD-ROM, or made available for downloading over a network such as the Internet or a mobile telephone network. The series of computer readable instructions may embody all or part of the functionality previously described herein.

It would be understood from the above that the present invention provides multiple advantages over the previously existing state of art. In particular, the invention enables automated identification, storage and retrieval of operator best practices based on a determination of operator experience and / or competence, thereby addressing the issue of employee turnover, as well as the need for operator guidance for infrequently or rarely implemented control processes. The invention additionally enables monitoring of operator compliance with standard operating procedures and / or best practices, and provides an intelligent and efficient context based triggering mechanism for providing guidance to control system operators.

While the exemplary embodiments of the present invention are described and illustrated herein, it will be appreciated that they are merely illustrative.

## Claims

1. A method for providing context based assistance to a control system operator, the method comprising:
detecting a first instance of a control system event;
determining event complexity corresponding to the first instance of the control system event, wherein said determination of event complexity is based on a set of predefined rules for ascertaining event complexity; and
responsive to determining that event complexity corresponding to the first instance of the control system event exceeds a predefined complexity threshold:
retrieving a set of operator inputs received at a control system in response to a detected second instance of the control system event, wherein the second instance of the control system event was detected prior in time to the detected first instance of the control system event; and
communicating to the control system operator,
information identifying a set of operator inputs for responding to the detected first instance of the control event, wherein the identified operator inputs are a sub-set of the retrieved set of operator inputs;
wherein the determination of event complexity is based on one or more of:
a number of control system processes that the control system operator is monitoring;
a length of time for which the control system operator has been on shift;
a total number of control system events of a predefined type that the control system operator has addressed during a shift;
physiological information corresponding to the control system operator; and
information describing rest or physical activity undertaken by the control system operator within a predefined time window.

2. The method as claimed in claim 1, wherein the determination of event complexity is further based on information relating to instances of the control system event previously encountered by the control system operator.

3. The method as claimed in claim 2, wherein the determination of event complexity is further based on one or more of:
a number of times that the control system operator has previously encountered instances of the detected control system event;
deviations by the control system operator from operator best practices, in response to previously encountered instances of the detected control system event; and
a number of detected alarm events.

4. The method as claimed in claim 1, further comprising monitoring operator inputs received from the control system operator for compliance with operator inputs identified within the information communicated to the control system operator.

5. The method as claimed in claim 4, comprising responding to deviations between the monitored operator inputs and the operator inputs identified within the information communicated to the control system operator, by communicating supplemental information identifying operator inputs for responding to the detected first instance of the control event.

6. A system for providing context based assistance to a control system operator of a control system comprising one or more processors, sensors or actuators, the system comprising:
a processor implemented operator interface (110, 604);
a control system event monitor (614) configured to detect a first instance of a control system event;
a complexity analyzer (610) configured to determine event complexity corresponding to the first instance of the control system event, wherein said determination of event complexity is based on a set of predefined rules for ascertaining event complexity;
an assistance controller (616) configured to respond to a determination that event complexity corresponding to the first instance of the control system event exceeds a predefined complexity threshold, by:
retrieving a set of operator inputs received at the control system in response to a detected second instance of the control system event, wherein the second instance of the control system event was detected prior in time to the detected first instance of the control system event; and
communicating to the control system operator,
information identifying a set of operator inputs for responding to the detected first instance of the control event, wherein the identified operator inputs are a sub-set of the retrieved set of operator inputs;
wherein the determination of event complexity is based on one or more of:
a number of control system processes that the control system operator is monitoring;
a length of time for which the control system operator has been on shift;
a total number of control system events of a predefined type that the control system operator has addressed during a shift;
physiological information corresponding to the control system operator; and
information describing rest or physical activity undertaken by the control system operator within a predefined time window.

7. The system as claimed in claim 6, wherein the complexity analyser (610) is configured to further determine event complexity based on information relating to instances of the control system event previously encountered by the control system operator.

8. The system as claimed in claim 7, wherein the complexity analyser (610) is configured to further determine event complexity based on one or more of:
a number of times that the control system operator has previously encountered instances of the detected control system event;
deviations by the control system operator from operator best practices, in response to previously encountered instances of the detected control system event; and
a number of detected alarm events.

9. The system as claimed in claim 6, further configured to monitor operator inputs received from the control system operator for compliance with operator inputs identified within the information communicated to the control system operator.

10. The system as claimed in claim 9, wherein the assistance controller (616) is configured to respond to deviations between the monitored operator inputs and the operator inputs identified within the information communicated to the control system operator, by communicating supplemental information identifying operator inputs for responding to the detected first instance of the control event.

11. The system as claimed in claim 6, configured so that a mode of communication for communicating information to the control system operator is selected based on the determined event complexity corresponding to the first instance of the control system event.

## Patentansprüche

1. Verfahren zur kontextbasierten Unterstützung für einen Steuersystembediener, wobei das Verfahren umfasst:
Verfassen eines ersten Vorgangs eines Steuersystemereignisses;
Bestimmen einer Ereigniskomplexität entsprechend dem ersten Vorgang des Steuersystemereignisses, wobei die Bestimmung der Ereigniskomplexität auf einem Satz von vorbestimmten Regeln zur Ermittlung der Ereigniskomplexität basiert;
in Abhängigkeit davon, dass die Bestimmung der Ereigniskomplexität entsprechend dem ersten Vorgang des Steuersystemereignisses einen vorgegebenen Komplexitätsschwellwert übersteigt:
Abrufen eines Satzes von Bedienereingaben, die an einem Steuersystem in Abhängigkeit von einem erfassten zweiten Vorgang des Steuersystemereignisses empfangen werden, wobei der zweite Vorgang des Steuersystemereignisses zeitlich vor dem oben genannten ersten Vorgang des Steuersystemereignisses erfasst wurde; und
Mitteilen an den Steuersystembediener von Information, die einen Satz von Bedienereingaben zur Antwort auf den erfassten ersten Vorgang des Steuerereignisses identifiziert, wobei die identifizierten Bedienereingaben ein Untersatz von den empfangenen Satz von Bedienereingaben sind;
wobei die Bestimmung der Ereigniskomplexität beruht auf einem oder mehreren der Folgenden beruht:
einer Anzahl von Steuersystemprozessen, die der Steuersystembediener überwacht;
einer Zeitdauer, über die der Steuersystembediener in der Schicht ist;
einer Gesamtzahl von Steuersystemereignissen eines vorgegebenen Typs, die der Steuersystembediener während einer Schicht adressiert hat;
physiologischer Information entsprechend dem Steuersystembediener; und
Information zum Beschreiben von Ruhe oder physischer Aktivität, die von dem Steuersystembediener innerhalb eines vorgegebenen Zeitfensters unternommen wurde.

2. Verfahren nach Anspruch 1, bei dem die Bestimmung der Ereigniskomplexität des Weiteren auf Information bezüglich Vorgänge des Steuersystemereignisses beruht, die vorher durch den Steuersystembediener gefunden wurden.

3. Verfahren nach Anspruch 2, bei dem die Bestimmung der Ereigniskomplexität des Weiteren auf einem oder mehreren der Folgenden beruht:
einer Anzahl von Malen, die der Steuersystembediener vorangehend Vorgänge des erfassten Steuersystemereignisses gefunden hat;
Abweichungen durch den Steuersystembediener von der Operator-Best-Practice in Abhängigkeit von vorangehend gefundenen Vorgängen des erfassten Steuersystemereignisses;
und
einer Anzahl von erfassten Alarmereignissen.

4. Verfahren nach Anspruch 1, des Weiteren mit einem Überwachen der Bedienereingaben, die von dem Steuersystembediener empfangen werden, hinsichtlich Erfüllung der Bedienereingaben, die mit der Information identifiziert wurden, die an den Steuersystembediener kommuniziert wird.

5. Verfahren nach Anspruch 4, mit Antworten auf Abweichungen zwischen den überwachten Bedienereingaben und den Bedienereingaben, die innerhalb der Information identifiziert wurden, die dem Steuersystembediener mitgeteilt wird, durch Kommunizieren von zusätzlicher Information, die Bedienereingaben zur Antwort auf den erhofften ersten Vorgang des Steuersystemereignisses identifiziert.

6. System zum Bereitstellen von kontextbasierter Unterstützung für einen Steuersystembediener eines Steuersystems mit einem oder mehreren Prozessoren, Sensoren oder Aktuatoren, wobei das System umfasst:
eine prozessorimplementierte Bedienerschnittstelle (110, 604);
einen Steuersystemereignismonitor (614), der ausgestaltet ist, um einen ersten Vorgang eines Steuersystemereignisses zu erfassen;
einen Komplexitäts-Analysierer (610), der ausgestaltet ist, um Ereigniskomplexität entsprechend einem ersten Vorgang des Steuersystemereignisses zu bestimmen, wobei die Bestimmung der Ereigniskomplexität auf einem Satz von vorbestimmten Regeln zur Ermittlung der Ereigniskomplexität basiert;
einer Unterstützungssteuerung (616), die ausgestaltet ist, um auf eine Bestimmung zu antworten, das die Ereigniskomplexität entsprechend dem ersten Vorgang des Steuersystemereignisses einen vorgegebenen Komplexitätsschwellwert übersteigt, mit:
Abrufen eines Satzes von Bedienereingaben, die von einem Steuersystem in Antwort auf einen erfassten zweiten Vorgang des Steuersystemereignisses empfangen werden, wobei der zweite Vorgang des Steuersystemereignisses zeitlich vor dem erfassten ersten Vorgang des Steuersystemereignisses erfasst wurde; und
Mitteilen an den Steuersystembediener von Information, die einen ersten Satz von Bedienereingaben zur Antwort auf den erfassten ersten Vorgang des Steuerereignisses identifiziert, wobei die identifizierten Bedienereingaben ein Untersatz des empfangenen Satzes von Bedienereingaben sind;
wobei die Bestimmung der Ereigniskomplexität auf einem oder mehreren der Folgenden beruht:
einer Anzahl von Steuersystemprozessen, die der Systembediener überwacht;
einer Zeitdauer, über der der Steuersystembediener auf seiner Schicht war;
einer Gesamtzahl von Steuersystemereignissen eines vorgegebenen Typs, die der Steuersystembediener während seiner Schicht adressiert hat;
physiologischer Information entsprechend dem Steuersystembediener; und
Information zum Beschreiben von Ruhe oder physischer Aktivität, die durch den Steuersystembediener innerhalb eines vorgegebenen Zeitfensters unternommen wurden.

7. System nach Anspruch 6, bei dem der Komplexitäts-Analysierer (610) ausgestaltet ist, um des Weiteren die Ereigniskomplexität basierend auf Information bezüglich der Vorgänge des Steuersystemereignisses zu bestimmen, die vorausgehend durch den Steuersystembediener gefunden wurden.

8. System nach Anspruch 7, bei dem der Komplexitäts-Analysierer (610) ausgestaltet ist, um des Weiteren die Ereigniskomplexität beruhend auf einem oder mehreren der Folgenden zu bestimmen:
einer Zahl von Malen, die der Steuersystembediener vorangehend Vorgängen des erfassten Steuersystemereignisses gefunden hat;
Abweichung durch den Steuersystembediener von der Operator-Best-Practice in Abhängigkeit von vorangehend gefundenen Vorgängen des erfassten Steuersystemereignisses;
und
einer Anzahl von erfassten Alarmereignissen.

9. System nach Anspruch 6, das des Weiteren ausgestaltet ist, um Bedienereingaben zu überwachen, die von dem Steuersystembediener erhalten werden, hinsichtlich der Übereinstimmung mit Bedienereingaben, die mit der Information identifiziert werden, die dem Steuersystembediener mitgeteilt wird.

10. System nach Anspruch 9, bei dem die Unterstützungssteuerung (616) ausgestaltet ist, um auf Abweichungen zwischen den überwachten Bedienereingaben und den Bedienereingaben, die innerhalb der Information, die dem Steuersystembediener mitgeteilt wurde, zu reagieren, durch Mitteilen von zusätzlicher Information, die Bedienereingaben für die Antwort auf den erfassten ersten Vorgang des Steuerereignisses identifiziert.

11. System nach Anspruch 6, das ausgestaltet ist, so dass ein Kommunikationsmodus zur Mitteilung von Informationen an den Steuersystembediener beruhend auf der bestimmten Ereigniskomplexität entsprechend dem ersten Vorgang des Steuersystemereignisses ausgewählt wird.

## Revendications

1. Procédé de fourniture d'une assistance basée sur le contexte à un opérateur de système de commande, le procédé comprenant :
la détection d'une première instance d'un événement de système de commande ;
la détermination d'une complexité d'événement correspondant à la première instance de l'événement de système de commande, dans lequel ladite détermination de complexité d'événement est basée sur un ensemble de règles prédéfinies pour établir une complexité d'événement ; et
en réponse au fait de déterminer que la complexité d'événement correspondant à la première instance de l'événement de système de commande excède un seuil de complexité prédéfini :
la récupération d'un ensemble d'entrées d'opérateur reçues au niveau d'un système de commande en réponse à une seconde instance détectée de l'événement de système de commande, dans lequel la seconde instance de l'événement de système de commande a été détectée préalablement à la première instance détectée de l'événement de système de commande ; et
la communication à l'opérateur de système de commande, d'informations identifiant un ensemble d'entrées d'opérateur pour répondre à la première instance détectée de l'événement de commande, dans lequel les entrées d'opérateur identifiées sont un sous-ensemble de l'ensemble d'entrées d'opérateur récupéré ;
dans lequel la détermination de la complexité d'événement est basée sur un ou plusieurs de :
un nombre de processus de système de commande que l'opérateur de système de commande surveille ;
une durée de temps pendant laquelle l'opérateur de système de commande a occupé un poste ;
un nombre total d'événements de système de commande d'un type prédéfini que l'opérateur de système de commande a traités durant une occupation de poste ;
des informations physiologiques correspondant à l'opérateur de système de commande; et
des informations décrivant un repos ou une activité physique entrepris par l'opérateur de système de commande à l'intérieur d'une fenêtre de temps prédéfinie.

2. Procédé selon la revendication 1, dans lequel la détermination de la complexité d'événement est en outre basée sur des informations se rapportant à des instances de l'événement de système de commande rencontrées précédemment par l'opérateur de système de commande.

3. Procédé selon la revendication 2, dans lequel la détermination de la complexité d'événement est en outre basée sur un ou plusieurs de :
un nombre de fois où l'opérateur de système de commande a rencontré précédemment des instances de l'événement de système de commande détecté ;
des écarts de la part de l'opérateur de système de commande par rapport à des meilleures pratiques d'opérateur, en réponse à des instances rencontrées précédemment de l'événement de système de commande détecté ; et
un nombre d'événements d'alarme détectés.

4. Procédé selon la revendication 1, comprenant en outre la surveillance d'entrées d'opérateur reçues de l'opérateur de système de commande pour conformité avec des entrées d'opérateur identifiées au sein des informations communiquées à l'opérateur de système de commande.

5. Procédé selon la revendication 4, comprenant la réponse aux écarts entre les entrées d'opérateur et les entrées d'opérateur identifiées au sein des informations communiquées à l'opérateur de système de commande, par la communication d'informations supplémentaires identifiant des entrées d'opérateur pour répondre à la première instance détectée de l'événement de commande.

6. Système de fourniture d'une assistance basée sur le contexte à un opérateur de système de commande d'un système de commande comprenant un ou plusieurs processeurs, capteurs ou actionneurs, le système comprenant :
une interface opérateur mise en œuvre par processeur (110, 604) ;
un moniteur d'événement de système de commande (614) configuré pour détecter une première instance d'un événement de système de commande ;
un analyseur de complexité (610) configuré pour déterminer une complexité d'événement correspondant à la première instance de l'événement de système de commande, dans lequel ladite détermination de la complexité d'événement est basée sur un ensemble de règles prédéfinies pour établir la complexité d'événement ;
un contrôleur d'assistance (616) configuré pour répondre au fait de déterminer que la complexité d'événement correspondant à la première instance de l'événement de système de commande excède un seuil de complexité prédéfini, par :
la récupération d'un ensemble d'entrées d'opérateur reçues au niveau du système de commande en réponse à une seconde instance détectée de l'événement de système de commande, dans lequel la seconde instance de l'événement de système de commande a été détectée préalablement à la première instance détectée de l'événement de système de commande ; et
la communication à l'opérateur de système de commande, d'informations identifiant un ensemble d'entrées d'opérateur pour répondre à la première instance détectée de l'événement de commande, dans lequel les entrées d'opérateur identifiées sont un sous-ensemble de l'ensemble d'entrées d'opérateur récupéré ;
dans lequel la détermination de la complexité d'événement est basée sur un ou plusieurs de :
un nombre de processus de système de commande que l'opérateur d'un système de commande surveille ;
une durée de temps pendant laquelle l'opérateur de système de commande a occupé un poste ;
un nombre total d'événements de système de commande d'un type prédéfini que l'opérateur de système de commande a traités durant une occupation de poste ;
des informations physiologiques correspondant à l'opérateur de système de commande ; et
des informations décrivant un repos ou une activité physique entrepris par l'opérateur de système de commande à l'intérieur d'une fenêtre de temps prédéfinie.

7. Système selon la revendication 6, dans lequel l'analyseur de complexité (610) est configuré pour déterminer en outre une complexité d'événement basée sur des informations se rapportant à des instances de l'événement de système de commande rencontrées précédemment par l'opérateur de système de commande.

8. Système selon la revendication 7, dans lequel l'analyseur de complexité (610) est configuré pour déterminer en outre une complexité d'événement basée sur un ou plusieurs de :
un nombre de fois où l'opérateur d'un système de commande a rencontré précédemment des instances de l'événement de système de commande détecté ;
des écarts de la part de l'opérateur d'un système de commande par rapport à des meilleures pratiques d'opérateur, en réponse aux instances rencontrées précédemment de l'événement de système de commande détecté ; et
un nombre d'événements d'alarme détectés.

9. Système selon la revendication 6, configuré en outre pour surveiller des entrées d'opérateur reçues de l'opérateur de système de commande pour conformité à des entrées d'opérateur identifiées au sein des informations communiquées à l'opérateur de système de commande.

10. Système selon la revendication 9, dans lequel le contrôleur d'assistance (616) est configuré pour répondre à des écarts entre les entrées d'opérateur surveillées et les entrées d'opérateur identifiées au sein des informations communiquées à l'opérateur de système de commande, par la communication d'informations supplémentaires identifiant des entrées d'opérateur pour répondre à la première instance détectée de l'événement de commande.

11. Système selon la revendication 6, configuré de sorte qu'un mode de communication pour communiquer des informations à l'opérateur de système de commande soit sélectionné sur la base de la complexité d'événement déterminée correspondant à la première instance de l'événement de système de commande.
